(19) **Europäisches Patentamt / European Patent Office / Office européen des brevets**

(11) **EP 3 835 575 B1**

(12) **EUROPEAN PATENT SPECIFICATION**

(45) Date of publication and mention
of the grant of the patent:
**24.08.2022 Bulletin 2022/34**

(21) Application number: **20210664.7**

(22) Date of filing: **30.11.2020**

(51) International Patent Classification (IPC):
**F04B 17/03** (2006.01)   **F04B 49/02** (2006.01)
**F04B 49/06** (2006.01)   **F04B 49/10** (2006.01)
**H02P 7/29** (2016.01)   **F04B 17/06** (2006.01)

(52) Cooperative Patent Classification (CPC):
**F04B 49/065; F04B 17/03; F04B 49/02;**
**F04B 49/10;** F04B 17/06; F04B 2203/0201;
F04B 2205/04; H02P 7/29

(54) **CONTROL SYSTEM**

STEUERUNGSSYSTEM

SYSTÈME DE COMMANDE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **10.12.2019 GB 201918133**

(43) Date of publication of application:
**16.06.2021 Bulletin 2021/24**

(73) Proprietor: **Spring (Europe) Limited**
**Crowborough, East Sussex TN6 3DZ (GB)**

(72) Inventor: **GATT, Andrew Patrick**
**Brighton, East Sussex BN6 6WD (GB)**

(74) Representative: **Akers, Noel James**
**N.J. Akers & Co**
**63 Lemon Street**
**Truro, Cornwall TR1 2PN (GB)**

(56) References cited:
JP-A- H06 255 562    US-A1- 2004 189 229
US-A1- 2010 225 263    US-A1- 2015 303 839
US-A1- 2019 316 578

• **"F3 PWM controller ICE3BS03LJG Off-Line SMPS**
**Current Mode Controller with integrated 500V**
**Startup Cell (Latched and frequency jitter**
**mode)", , 6 December 2007 (2007-12-06),**
**XP055261952, Website Infineon Technologies AG**
**Retrieved from the Internet:**
**URL:http://www.infineon.com/dgdl/Infineon-**
**ICE3BS03LJG-DS-v02_00-en.pdf?fileId=db3a30**
**431689f4420116b2b751ff05b0 [retrieved on**
**2016-03-31]**
• Wobit: **"SID1812v2 Manual DC motor driver 12 A**
**with regulation of velocity, direction and**
**MODBUS-RTU interface", , 15 January 2015**
**(2015-01-15), XP055794486, online Retrieved**
**from the Internet:**
**URL:https://www.tme.eu/de/Document/d687b3c**
**ef0e5cd3b4cb2cfb3376aff20/SID1812v2_manual**
**.pdf [retrieved on 2021-04-12]**
• **ANDREYCAK B: "APPLICATION NOTE - THE**
**UCC38C42 FAMILY OF HIGH-SPEED, BICMOS**
**CURRENT MODE PWM CONTROLLERS", TEXAS**
**INSTRUMENTS APPLICATION REPORT, XX, XX,**
**1 February 2002 (2002-02-01), pages 1-18,**
**XP002309497,**

**Description**

The invention relates to a control system, and especially a control system for controlling a pumped fluid delivery system.

US 2010225263 A1 discloses a motor driving circuit and method for driving a motor, in particular for starting the motor of a cooling fan.

US 2019316578 A1 discloses an electric pump device, in particular an oil pump. A control unit controls the value of current supplied to the motor to control rotation of the motor, thereby controlling the flow rate of fluid discharged from the oil pump.

US 2004189229 A1 discloses an H-bridge drive utilising a pair of high side and low side MOSFETs in a common insulation housing.

'F3 PWM controller ICE3BS03LJG Off-line SMPS Current Mode Controller with integrated 500V Startup Cell (Latched and frequency jitter mode)", 6 December 2007 (2007-12-06) XP055261952, Website Infineon Technologies AG' is a datasheet for an SMPS current mode controller.

JP H06255562 A discloses a bicycle with an electric motor providing a human-powered drive system and an electric motor-driven drive system in parallel.

Pumped fluid delivery systems are frequently used with portable water-fed cleaning equipment, such as water-fed pole mounted cleaning brushes. These type of pole mounted cleaning brushes are often used with telescopic poles for example, for cleaning sections of buildings, such as glazed sections of buildings.

Often such equipment must be portable to enable ease of access to the building and so it can be used in an outdoor environment. Therefore, the pumped fluid delivery systems are usually powered by a self-contained power supply, such as a battery, which is a DC power supply. Typically, the type of batteries used are rechargeable.

When working with such pumped fluid delivery systems, as well as varying the flow by varying the speed of the pump, it is often required to stop and start the flow at the point of delivery, using a valve. A blockage or other obstruction in the system, such as a kink in the hose, may also stop the flow.

When the flow is stopped, the pump is still running. Left unchecked pressure will build to dangerous levels and cause mechanical issues with the pump or fluid delivery system.

Traditionally, to protect against this a pressure activated switch is placed in-line with the power source to the pump. When the pressure reaches a pre-set value, the switch opens and breaks the circuit between the pump and the power supply. This stops the pump and prevents the build-up of high pressure in the fluid and damage to the pump and fluid delivery system. When the control valve is opened, the pressure drops, the pressure switch closes, the pump is re-connected to the power supply and starts to pump again.

If the working pressure is generally unknown (or likely to vary), the pressure switch is usually set to activate at the highest pressure rating of the pump. This means the pressure activated switch only activates at the highest pump electrical currents and fluid system pressures. Therefore, although all components stay within operating parameters, the system is now at a pressure much higher than the normal delivery pressure.

This high pressure can cause two problems. The first is the wasted energy to achieve these high pressures, which is a critical problem for battery operated systems. The second is upon releasing the valve the high pressure causes a much higher flow than required at the point of delivery.

Many pressure switches are designed to activate in emergency situations only and therefore incur occasional use. For systems that are regularly turned on and off, the high current switching can cause electrical arcs on the contacts, which can cause the surfaces of the contacts to oxidise. This can prevent the contacts from closing correctly, thereby effectively preventing the switch from closing and causing the system to fail by preventing power supply to the pump.

It is common practise to control the average voltage applied to the pump using Pulse Width Modulation (PWM). PWM uses a repeating time period (or cycle). The DC source voltage is turned on for a portion of each period and turned off for the remainder of the period. The time for which the voltage is turned on is known as the pulse width. Therefore, the pump is only powered during the pulse width that the voltage is applied and by varying the pulse width it is possible to control the average voltage applied to the pump.

Duty ratio is the ratio of the pulse width to the PWM period and is calculated using:

$$duty\ ratio\ (\%) = (\frac{pulse\ width}{period}) \times 100$$

The current flowing in the pump during the pulse width is often measured using a low resistance resistor in either the electrical supply to the pump or the return path to earth from the pump. By Ohm's law, the potential difference across the resistor is proportional to the current flowing through the resistor.

Hence, determining the pressure in the fluid system, relies on the relationship between pressure and pump current, where pump current increases with increased pressure at the same flow rate. The flow rate is controlled by the rotation speed of the pump and the rotation speed of the pump is linearly related to the applied voltage.

However, it is difficult to use pump current to reliably and quickly detect small pressure changes at the point of delivery. In water-fed cleaning systems it is not uncommon to have long stretches of flexible hosing between the pump outlet and the point of delivery. The long flexible hose means the build-up of pressure at the pump head is delayed. This can lead to slow pressure increase detection, wasting energy and building up pressure. The slow response also makes it difficult to quickly and reliably detect a pressure reduction using pump current without causing the pump to inject some fluid into the system which, over time, will increase pressure.

In accordance with a first aspect of the invention, there is provided a method of controlling the speed of a direct current electric powered pump using pulse width modulation of the voltage applied to the pump, wherein the speed of the pump is increased by increasing the ratio of the pulse width to the time period of one cycle of the pulse width modulation to a target ratio over a time interval that is not dependent on the target ratio.

In accordance with a second aspect of the invention, there is provided apparatus for controlling the speed of a direct current electric powered pump using pulse width modulation of the voltage applied to the pump, the apparatus comprising a processor and a switch device coupled to an output from the processor, the switch device being adapted to switch the power supply for the pump on or off in response to output signals received from the processor; and wherein the processor increases the speed of the pump by increasing the ratio of the switch on time to the time period of one cycle of the pulse width modulation until a target ratio is reached, the ratio being increased to the target ratio over a time interval that is not dependent on the target ratio.

The ratio of the pulse width or switch on time to the time period of one cycle is preferably increased at least partially linearly up to the target ratio. Preferably, the increase is substantially linear all the way up to the target ratio, and more preferably the increase has a substantially constant rate of increase. It is also possible, however, that where the increase is linear, it is composed of multiple linear increases with different rates of increase.

In alternative embodiments of the present invention, the ratio may be increased non-linearly or in a combination of linear and non-linear increases.

The processor may be a microcontroller.

In a preferred embodiment, the time interval is pre-determined. For example, the time interval may be determined prior to controlling the speed of the pump. The time interval is most preferably fixed. In other words, the time interval has a constant value regardless of the target ratio.

Typically, the time interval may be at least 10ms. The time interval may be less than 10s. The time interval may preferably be from 0.1s to 5s and more preferably from 0.5s to 3s. In one example the time interval is 1.5s. The time interval may be dependent on the characteristics of the pump.

The pulse width modulation frequency is preferably at least 20kHz. This frequency is selected as it is typically above the audible limit for humans. Of course, a lower frequency may be employed if desired. For example the pulse width modulation frequency may be at least 10kHz, or at least 1kHz.

Accordingly, the time period of one cycle of the pulse width modulation may typically be at least $1\mu$s. Typically, the time period of one cycle is less than 1ms. Preferably the time period of one cycle is from $10\mu$s to $200\mu$s and most preferably from $20\mu$s to $125\mu$s. In one example, the time period of one cycle may be $50\mu$s.

The ratio of the pulse width to the time period of one cycle may be increased from zero up to the target ratio.

In a preferred method according to the present invention, the pulse width modulation is stopped upon a determination that current drawn by the pump exceeds a threshold, wherein the current drawn by the pump is the instantaneous current measured over one cycle of the pulse width modulation.

Once stopped, the pulse width modulation may be re-started after a time delay. After it is restarted, the pulse width modulation may be stopped upon a further determination that the current drawn by the pump exceeds the threshold.

This process may be repeated such that the pulse width modulation is repeatedly stopped after being re-started until the current drawn by the pump does not exceed the threshold.

The current drawn by the pump is generally directly proportional to a fluid back pressure between the pump and a fluid delivery device coupled to a fluid outlet of the pump. Thus, the pulse width modulation may be stopped when the fluid back pressure exceeds a threshold, as indicated by the current drawn by the pump. The pulse width modulation may be re-started once the current drawn by the pump does not exceed the threshold, indicating that the fluid back pressure has fallen to a desired level.

The processor may be further adapted to receive an input signal that is indicative of the current drawn by the pump, wherein the current drawn by the pump is the instantaneous current measured over one cycle of the pulse width modulation.

The processor may be adapted to control the switch device to stop the pulse width modulation upon a determination that the input signal exceeds a threshold.

The processor may be adapted to control the switch device to re-start the pulse width modulation after a time delay.

The processor may be adapted to repeatedly stop the pulse width modulation after being re-started until the current drawn by the pump does not exceed the threshold.

The processor may be adapted to control the switch to re-start the pump after a time delay, wherein the processor increases the speed of the pump to the target ratio upon a further determination that the input signal does not exceed the threshold.

The switch device preferably comprises a semiconductor switch, for example a transistor. Preferably the transistor is a FET, for example a MOSFET. The MOSFET may be a pMOSFET but is most preferably an nMOSFET.

The switch device may further comprise a driving circuit that receives the output signals from the processor, the switch device being controlled by the driving circuit in response to the received output signals. The driving circuit may be a half bridge driver.

The input signal is preferably generated by an amplifier, the output of the amplifier being operatively connected to an input of the processor. The amplifier may be adapted to detect a voltage drop, the voltage drop being directly proportional to the current drawn by the pump. The amplifier may comprise an operational amplifier. The amplifier may be configured as a differential amplifier.

The amplifier may detect a voltage drop across an impedance coupled in series with the pump. The output signal from the amplifier is preferably proportional to the voltage drop across the source of impedance, the voltage drop being proportional to the instantaneous current drawn by the pump. Preferably, the impedance comprises a resistor.

Preferably, the output from the amplifier is connected directly to the input of the processor. In other words, the output of the amplifier is connected to the input of the processor without any intervening processing electronics, such as a filter.

Preferably, the apparatus of the second aspect of the invention is configured to perform the method according to the first aspect of the invention.

As discussed above, the pump is a direct current electric powered pump. The pump may be rated to operate at any suitable DC voltage. However, preferably, the pump is rated to operate at 24V or less, and more preferably 12V. The pump may have a useful current range of from 200mA to 60A, preferably 500mA to 30A.

In one example of the present invention, the pump forms part of a fluid delivery system. This, for example, may be a fluid delivery system for a cleaning system, such as a fluid fed pole cleaning system. The cleaning system may comprise a cleaning device, such as a brush. The fluid fed pole cleaning system may be used in apparatus adapted for cleaning, such as for cleaning outdoor surfaces, for example, windows. The pole may be a telescopic pole. The pole may have a cleaning device, such as a brush mounted at an end of the pole. The fluid delivery system may be used to pump a cleaning fluid, for example a liquid such as water, to the cleaning device during cleaning. Where the cleaning device is mounted on a pole, the cleaning fluid may be delivered to the cleaning device through the pole. The pump may be connected to the pole via a hose, for example a flexible hose.

The fluid delivery system may include a valve that can be closed to prevent delivery of cleaning fluid to the cleaning device. The valve may be operated by a user. The valve may be a valve located on the cleaning device, in the pole (if present) or a valve located in the hose, typically close to the connection between the hose and cleaning device or between the hose and the pole. Typically, where the fluid delivery system includes a pole, the valve is located at or adjacent an opposite end of the pole to the end at which the cleaning device is located.

When the valve is closed, fluid back pressure may increase in the fluid delivery system. This back pressure may place increased demand on the pump, and may cause the pressure in the system to build to undesirably high levels.

In response to the increased back pressure, the pump may draw a higher current.

Back pressure in the system may also be caused to increase by other factors. For example a blockage, such as grit in the cleaning device, may restrict the flow of fluid to increase back pressure in the fluid delivery system. If the system includes a hose, kinks in the hose may also restrict fluid flow and increase back pressure.

Thus, methods and apparatus according to the present invention may be employed to control the speed of the pump in the fluid delivery and stop the pulse width modulation of the pump when the current drawn by the pump exceeds a predetermined threshold to prevent the build-up of excessive back pressure in the fluid delivery system.

Examples of a control system in accordance with the invention will now be described with reference to the accompanying drawings, in which:

Fig. 1 is a schematic diagram of a pumped fluid delivery system;

Fig. 2 is a schematic circuit diagram of a first example of a control system for controlling the pumped fluid delivery system;

Fig. 3 is a schematic circuit diagram of a second example of a control system for controlling the pumped fluid delivery system;

Fig. 4 is a flow diagram showing how the system determines whether a flow control valve has been closed; and

Fig. 5 is a graph showing duty ratio versus time for different target duty ratios.

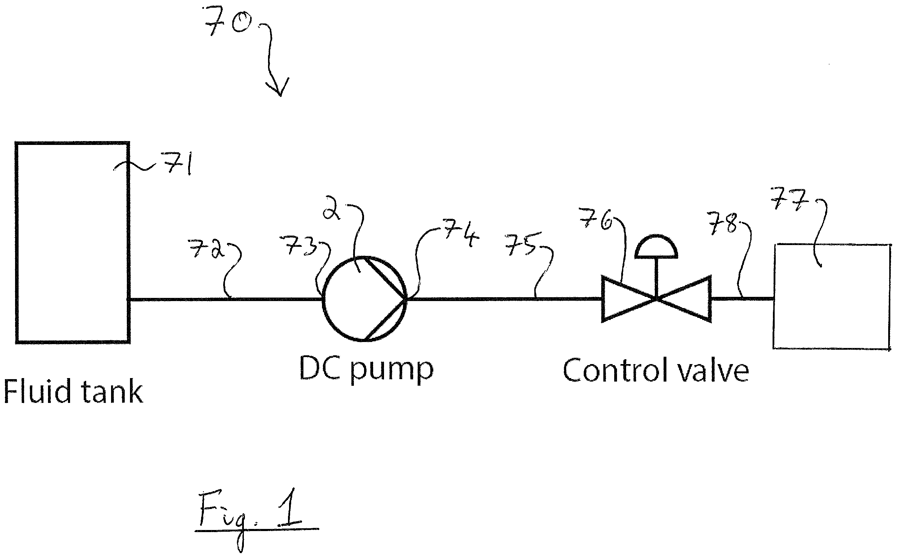

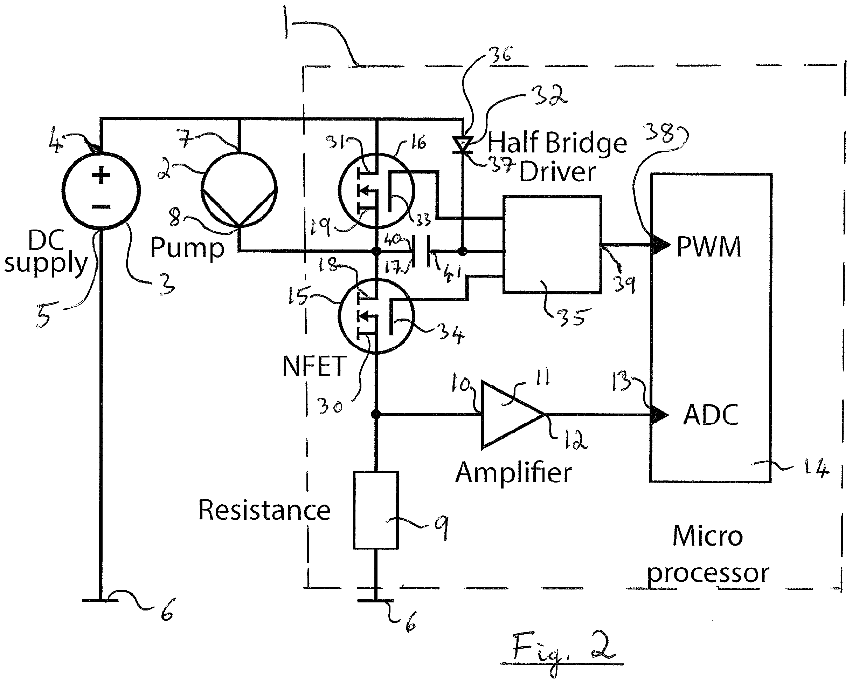

Fig. 1 is a schematic diagram of a pumped fluid delivery system 70. The pumped fluid delivery system 70 has a fluid tank 71 for containing a fluid, which is typically a liquid. The tank 71 is coupled by a first fluid conduit 72 to a fluid inlet 73 of a pump 2. The pump 2 has a fluid outlet 74 that is coupled by a second fluid conduit 75 to a control valve 76, which is coupled by a third fluid conduit 78 to a fluid delivery device 77. The fluid delivery system 70 may be a cleaning liquid delivery system and the cleaning liquid may be water or water with an added cleaning agent. In one example, the fluid delivery device 77 may have a brush attachment for cleaning. In this case the liquid delivery may be through the brush attachment. Where the fluid delivery device is for cleaning outdoor surfaces, such as windows, the fluid delivery device 77 may comprise a pole, which may be a telescopic pole, with a brush mounted on an end of the pole. The fluid conduits 72, 75, 78 may comprise hose or pipe of any combination of hose and pipe. Typically, the control valve 76 is a manually operated valve and may be adapted to be operated by a hand of a user without any additional tools. The pump 2 may be a DC electric pump. Where the fluid fed delivery system is portable or transportable, the power source 3 (see Fig. 2) for the pump may be a battery, such as a rechargeable battery. In one example, the battery may be a 12V rechargeable battery. Where mains electricity is available, the power source 3 may comprise an AC to DC power supply unit, which will generate the required voltage for the pump. In one example this may be 12V DC where the pump is a 12V DC pump.

Fig. 2 is a schematic circuit diagram of a first example of a control system 1 for controlling the pumped fluid delivery system 70. The pump 2 is powered by the DC voltage supply 3, such as a rechargeable 12V battery. As the pump 2 is powered by a DC voltage supply, the pump 2 is a DC electric pump and where the DC voltage supply is 12 V, the pump 2 is a 12 V DC electric pump.

A positive terminal 4 of the battery 3 is electrically coupled to a first electrical terminal 7 of the pump 2, a drain 31 of a first n-channel metal oxide semiconductor field effect transistor (nMOSFET) 16 and an anode 36 of a diode 32. A negative terminal 5 of the battery 3 is electrically coupled to an electrical earth 6. A second electrical terminal 8 of the pump 2 is electrically coupled to a source 19 of the first nMOSFET 16, a drain 18 of a second nMOSFET 15, and a first terminal 40 of a capacitor 17. A source 30 of the second nMOSFET 15 is electrically coupled to a terminal of a resistor 9, which has its other terminal connected to the earth 6, and an input 10 of a non-inverting operational amplifier 11. An output 12 of the amplifier 11 is electrically coupled to an analogue to digital converter (ADC) input 13 of a microcontroller 14. The other terminal 41 of the capacitor 17, and gates 33, 34 of the first and second nMOSFETs are coupled to a half bridge driver 35. The other terminal of the capacitor 17 is also coupled to a cathode 37 of the diode 32. The half bridge driver 35 has an input 39 that is electrically coupled to a pulse width modulation output (PWM) 38 from the microcontroller 14.

In the example shown in Fig. 2, the resistor 9 has a value of 4mΩ, although the exact value depends on a number of different factors including the current requirements of the pump 2 and the gain of the amplifier 11. The amplifier 11 typically has a gain of 50 and the capacitor 17 typically has a capacitance of 100nF. Components with these values are suitable for use with the pump 2 having a useful current range from 200mA to 15A. If the pump 2 has a different useful current range, the values of the components, such as the resistor 9, amplifier 11 and capacitor 17, could be modified accordingly. For example, it is possible that the resistance of the resistor 9 could be in the range 1mΩ to 100mΩ.

As shown in Fig. 2, the output 12 of the amplifier 11 is connected directly to the ADC input 13 of the microcontroller 14. This means that the output signal from the amplifier 11 is fed directly to the ADC input 13 of the microcontroller without any intervening electronic components. The advantage of this is that the output signal from the amplifier 11 that is fed to the ADC input 13 provides an indication of the cycle current through the pump and has a high signal to noise ratio at any duty ratio.

The output signal from the operational amplifier 11 is equivalent to the voltage drop ($V_r$) across the resistor 9 multiplied by the gain of the amplifier 11, which in this example is 50. The output from the operational amplifier 11 is a variable voltage signal that is directly proportional to the current consumption of the pump 2. The current consumption of the pump 2 is directly proportional to the electrical load on the pump 2 and this in turn is directly proportional to a fluid back pressure between the pump 2 and a fluid outlet on a fluid transfer device connected to the pump 2. Therefore, the output signal from the amplifier 11 is indicative of the instantaneous current through the pump in a given PWM period (or cycle), which in turn is indicative of the fluid back pressure.

In response to the output signal from the amplifier 11 that is received at the ADC input 13 of the microcontroller 14, the microcontroller outputs a control signal on the PWM output 38 to control the half bridge driver to switch the nMOSFETs 15, 16 on or off. The half bridge driver switches the nMOSFETs 15, 16 on and off by generating output signals to the gates 33, 34 of the nMOSFETs 15, 16. Only one of the nMOSFETs 15, 16 is on at any one time. When the nMOSFET 15 is switched on (and the nMOSFET 16 is switched off), the pump 2 is connected to the earth 6 via the resistor 9 and the pump 2 is switched on. When the nMOSFET 15 is switched off, the pump 2 is disconnected from the earth 6 and the pump 2 is switched off. When the nMOSFET 15 is switched off, the terminal 40 of the capacitor 17 rises to the same voltage as the DC supply, raising the terminal 41 of the capacitor 17 to twice the DC supply voltage minus the forward voltage drop of the diode 32. As nMOSFETs require a gate voltage above the source voltage to switch on and the source 19 of the nMOSFET 16 is now at the DC supply voltage, the high voltage is used by the half bridge driver 35 to turn on the nMOSFET 16. Turning on the nMOSFET 16 absorbs the back EMF from the pump and protects the electronics within the control system 1.

Where the pump 2 is used to deliver fluid as part of the pumped fluid delivery system 70, there is typically a length of hose 75 coupled to the fluid outlet 74 of the pump 2. The end of the hose 75 remote from the pump is coupled to a cleaning brush mounted on a pole 77, such as a telescopic pole. Typically, either the telescopic pole or the section of hose adjacent to the pole will incorporate the valve 76 to enable a user of the pole to switch off fluid delivery to the cleaning brush without having to go back to the pump unit 2. When the valve 76 is closed, this creates a back pressure in the hose 75 and the pump 2 that generates more load on the pump 2.

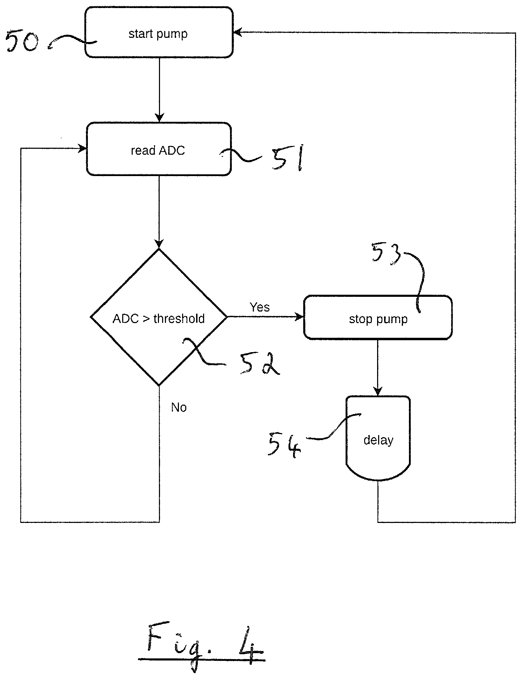

Fig. 4 is a flow diagram that illustrates how the output signal from the amplifier 11 is processed by the microcontroller 14. When the pump 2 is started 50 by switching on the nMOSFET 15, the microcontroller 14 reads 51 the signal received at the ADC input 13. The signal received is compared 52 with a threshold value. If the signal received is not greater than the threshold value, the ADC input 13 is read 51 again.

This loop of reading 51 the ADC input 13 and comparing 52 it with the threshold continues until the ADC input is greater than the threshold, When the comparison 52 produces a result that the ADC input 13 is greater than the threshold, this indicates that a user of the water-fed delivery system has stopped the flow of fluid, typically at the pole end of the fluid delivery system. Therefore, when the microcontroller 14 detects that the threshold is exceeded, the microcontroller 14 outputs a control signal from the PWM 38 to the half bridge driver 35 to switch off the nMOSFET 15 to stop 53 the pump 2. At the same time the nMOSFET 16 is switched on. There is then a delay 54 before the pump 2 is started 50. An example of a typical delay is 3 seconds but a different delay, either more or less than 3 seconds, could be used, as desired.

If, when the pump is started 50 again, the microcontroller reads 51 a signal received at the ADC input 13 that when compared 52 with the threshold is still greater than the threshold, the pump is then stopped 53 again and another delay 54 occurs before the pump is started 50 again. As the input received at the ADC input 13 is indicative of the instantaneous cycle current, as opposed to the average current over a number of cycles, this enables the pump 2 to be stopped more quickly on a single current cycle, thereby helping to minimise the build-up of pressure within the fluid delivery system.

In Fig. 2 the voltage across the resistor 9 is detected (and hence the current is measured) on the electrical current return path of the pump with the amplifier 11 electrically coupled to the high voltage side of the resistor 9 (or to the low voltage side of the pump 2).

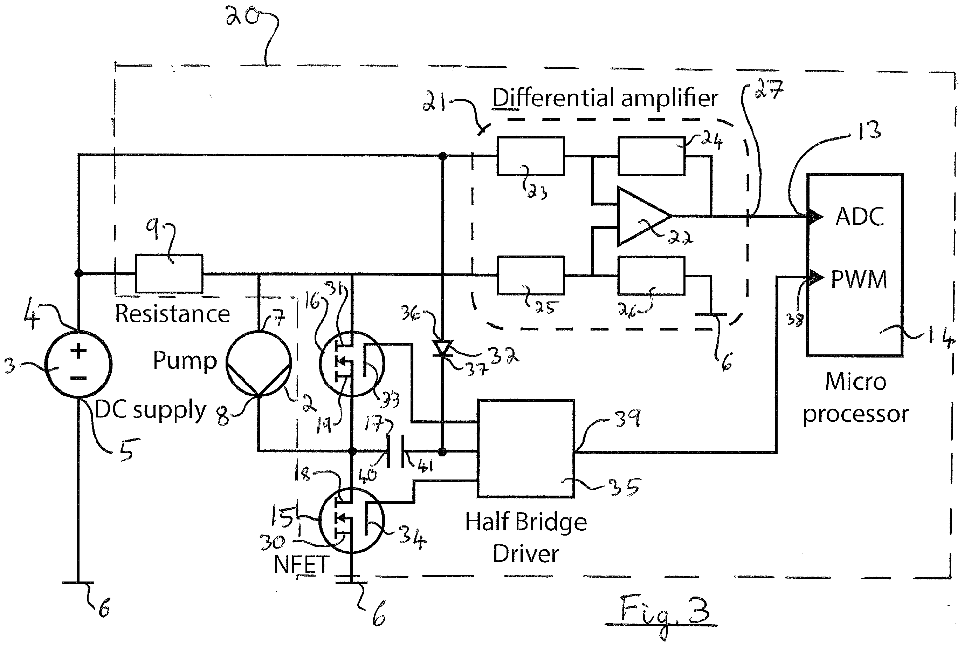

A second example of a control system 20 for controlling a pumped fluid delivery system is shown in Fig. 3. Components of the system 20 that are the same as system 1 of Fig. 2 are indicated with the same reference numerals as used in Fig. 2.

In Fig. 3 the relative positions of the pump 2 and the resistor 9 are interchanged so that the resistor 9 is located in the supply path to the pump 2 instead of in the return path. This means that the resistor 9 is electrically coupled between the DC supply 3 and the pump 2.

In addition, instead of the non-inverting operational amplifier 11, a differential amplifier arrangement 21 is electrically coupled in parallel across the resistor 9. The differential amplifier arrangement 21 comprises an operational amplifier 22 and four resistors 23, 24, 25, 26. Therefore, output 27 from the differential amplifier 21 that is fed to the ADC input 13 is equal to the voltage drop across the resistor 9 multiplied by the gain of the operational amplifier 22.

In the example shown in Fig. 3, typical values for the components are: the resistor $9 = 4m\Omega$; the capacitor 17 = 100nF; the gain of the operational amplifier 22 = 50; the resistor 23 = $10k\Omega$; the resistor 24 = $500k\Omega$; the resistor 25 = $10k\Omega$; and the resistor 26 = $500k\Omega$. Therefore, the gain of the differential amplifier 21 = resistor 24/resistor 23 = $500k\Omega/10k\Omega$ = 50.

An advantage of the arrangement shown in Fig. 3 is that by locating the resistor 9 on the supply side of the pump 2 and by using the differential amplifier 21 it is possible to detect the current if the wire on the supply side of the pump is shorted to ground, for example, accidentally.

As an alternative to the arrangement shown in Fig. 2, it is also possible that the differential amplifier arrangement 21 could be used across the resistor 9 in Fig. 2 in the return path from the pump in place of the non-inverting amplifier 11.

The arrangements shown in Figs. 2 and 3 have the advantage of having a zero delay between actual current increase and the detected current increase at the microcontroller 14. There is also the advantage that there is a 1:1 linear relationship in percentage change of pump cycle current to percentage change of detected current for all duty ratios that meet the minimum pulse width requirement.

After the pump 2 has been stopped 53 following a decision by the microcontroller 14 that the water flow in the fluid delivery system has been shut off, there is no current being used by the pump 2. At this point there is no possible method of detecting a reduction in pressure in the fluid system. Therefore, the pump 2 must be started 50 to measure the current and assess whether the pressure has gone below the threshold that caused the microcontroller to switch off the pump 2. However, the control system 1, 20 must not provide enough energy to the pump 2 to cause fluid to be injected into the fluid delivery system, which would pressurise the fluid delivery system.

Conventional systems use a fixed acceleration of the pump to ramp the duty ratio towards the target duty ratio. However, the inventor has found that this creates a temporary period of high current (or spike in the current), which can be significantly higher than the desired (or working) current, as the duty ratio reaches the target duty ratio, especially for low value target duty ratios. A spike in current will trigger the over threshold condition 52 and stop the pump 53, even though the fluid is no longer obstructed. This is a false detection and prevents the control system from restarting correctly. To allow the system to restart the threshold must be increased to compensate for the spike in current so the over threshold condition 52 is not reached. By increasing the threshold to compensate for a spike in current, as opposed to the working current, the control system is not stopping the pump as fast as it could and adding additional pressure to the system. Therefore, to reliably detect a reduction in pressure in conventional systems, the threshold must be set high to compensate and this reduces the effectiveness of the control system.

However, the inventor has also found that instead of using a fixed acceleration of the duty ratio, improvements in the effectiveness of the control system can be obtained by setting a fixed time to get to the target duty ratio and to calculate the required acceleration of the duty ratio based on the target duty ratio and the fixed time to achieve the target duty ratio. Therefore, by using a non-fixed acceleration of the pump that is based on the target duty ratio and the fixed time period to achieve the target duty ratio, these spikes can be reduced by using a slower acceleration for lower value target duty ratios. The acceleration of the duty ratio is preferably at least partially linear.

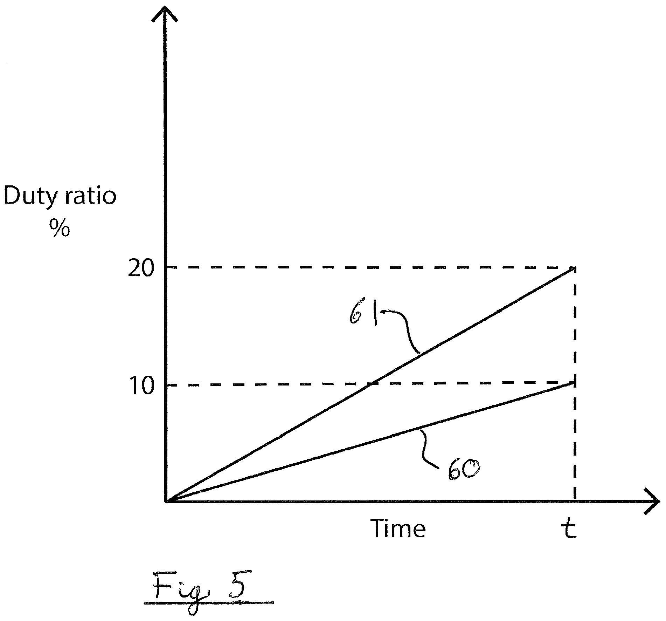

Fig. 5 shows how the duty ratio increases with time when the pump is started. A first graph 60 shows the increase in duty ratio with time for a target duty ratio of 10% and the second graph 61 shows the increase in duty ratio with time for a target duty ratio of 20%. From the graphs 60, 61 it can be seen that where the time (t) to reach the target duty ratio is fixed, the rate of increase of the duty ratio (which is equivalent to the acceleration of the pump motor) to get to the 10% target duty ratio is less than the rate of increase of the duty ratio required to reach the 20% target duty ratio.

Therefore, where the time to accelerate to the target duty ratio is fixed, the acceleration is lower when the target duty ratio is lower. The inventor has found that this helps to reduce current spikes when the current increases due to an increase in the duty ratio.

It will be noted from Fig. 5 that the acceleration of the duty ratio is substantially linear. However, it is possible that the acceleration could be non-linear or a combination of linear and non-linear accelerations. It is also possible that where the acceleration is linear, this could be composed of multiple linear accelerations each with different accelerations.

For any given combination of DC pump and fluid system there is an optimal length of acceleration to balance the temporary high current with the length of energising the pump. The length should be chosen so that peak currents are minimised, without injecting fluid. For example, where a pulse width modulation frequency of 20kHz is used, the pulse width is 50μs and the fixed time, t, to reach the target duty ratio may be fixed at 1.5s.

The acceleration is calculated at the beginning of the retest. The total time of acceleration is fixed. If the pump reaches the target speed without the current going over the internal threshold, then there has been a reduction in pressure of the fluid system and the pump can continue.

By having a variable acceleration retest, the temporary period of high current is reduced, so the threshold can be set closer to the running value. Having the threshold closer to the running current means the control system can detect smaller changes in current, reacting faster to valve closures (such as closures in the control valve 76), reducing energy waste and fluid system pressure.

Using a target speed dependant pump acceleration during retest, has the advantage of limiting the spike in current where the pump transitions from acceleration to fixed speed. This allows the user to set the internal threshold closer to the actual running pressure, allowing faster over pressure detection, while retaining reliability of pressure reduction detection.

Using cycle by cycle current measurement means it is possible to detect smaller changes in current, therefore smaller changes in pressure, especially at lower flow rates.

By minimising the time to detect over pressure and minimising the time to detect a reduction in pressure, the control system is more efficient, faster and more reliable for the user.

**Claims**

1. A method of controlling the speed of a direct current electric powered pump (2) using pulse width modulation of the voltage applied to the pump, **characterised in that** the speed of the pump (2) is increased by increasing the ratio of the pulse width to the time period of one cycle of the pulse width modulation to a target ratio over a time interval (t) that is not dependent on the target ratio.

2. A method according to claim 1, wherein the ratio of the pulse width to the time period of one cycle of the pulse width modulation is increased linearly (60, 61).

3. A method according to claim 1 or claim 2, wherein the time interval (t) is pre-determined.

4. A method according to any of the preceding claims, wherein the time interval (t) is fixed.

5. A method according to any of the preceding claims, wherein the time interval (t) is from 10ms to 10s, preferably the time interval (t) is from 0.1s to 5s, and more preferably the time interval (t) is from 0.5s to 3s.

6. A method according to any of the preceding claims, wherein the time period of one cycle is from $1\mu$s to 1ms.

7. A method according to any of the preceding claims, wherein the ratio is increased from zero.

8. A method according to any of the preceding claims, wherein the pulse width modulation is stopped (53) upon a determination (52) that current drawn by the pump (2) exceeds a threshold, wherein the current drawn by the pump (2) is the instantaneous current measured over one cycle of the pulse width modulation.

9. A method according to claim 8, wherein the pulse width modulation is restarted (50) after a time delay (54), preferably the pulse width modulation being stopped (53) upon a further determination (52) that the current drawn by the pump exceeds the threshold, and more preferably the pulse width modulation is repeatedly stopped (53) after being re-started (50) until the current drawn by the pump does not exceed the threshold.

10. A method according to any of claims 8 or 9, wherein the current drawn by the pump (2) is directly proportional to a fluid back pressure between the pump (2) and a fluid delivery device coupled to a fluid outlet of the pump.

11. Apparatus (1, 20) for controlling the speed of a direct current electric powered pump (2) using pulse width modulation of the voltage applied to the pump in accordance with any of claims 1 to 12, the apparatus (1, 20) comprising a processor (14) and a switch device (15, 16) coupled to an output from the processor (14), the switch device (15, 16) being adapted to switch the power supply (3) for the pump on or off in response to output signals received from the processor (14); **characterised in that** the processor (14) increases the speed of the pump (2) by increasing the ratio of the switch on time to the time period of one cycle of the pulse width modulation until a target ratio is reached, the ratio being increased to the target ratio over a time interval (t) that is not dependent on the target ratio.

12. Apparatus (1, 20) according to claim 11, wherein the processor (14) is adapted to receive an input signal that is indicative of the current drawn by the pump (2), wherein the current drawn by the pump is the instantaneous current measured over one cycle of the pulse width modulation, preferably the processor (14) is adapted to control the switch device (15, 16) to stop (53) the pulse width modulation upon a determination (52) that the input signal exceeds a threshold, more preferably the processor (14) is adapted to control the switch device (15, 16) to re-start (50) the pulse width modulation after a time delay (54), and most preferably the processor (14) is adapted to repeatedly stop (53) the pulse width modulation after being re-started (50) until the current drawn by the pump does not exceed the threshold.

13. Apparatus (1, 20) according to claims 11 or 12, wherein the switch device (15, 16) further comprises a driving circuit (35) that receives the output signals from the processor (14), and wherein the switch device (15, 16) is controlled by the driving circuit (35) in response to the received output signals; and preferably the driving circuit (35) is a half bridge driver.

**Patentansprüche**

1. Verfahren zur Steuerung der Geschwindigkeit einer mit Gleichstrom angetriebenen elektrischen Pumpe (2) durch Verwenden einer Pulsweitenmodulation der Spannung, die an die Pumpe angelegt wird, **dadurch gekennzeichnet, dass** sich die Geschwindigkeit der Pumpe (2) durch Erhöhen des Verhältnisses der Pulsweite zum Zeitraum eines Zyklus der Pulsweitenmodulation zu einem Zielverhältnis über ein Zeitintervall (t) hinweg, das nicht von dem Zielverhältnis abhängig ist, erhöht.

2. Verfahren nach Anspruch 1, wobei sich das Verhältnis der Pulsweite zum Zeitraum eines Zyklus der Pulsweitenmodulation linear erhöht (60, 61).

3. Verfahren nach Anspruch 1 oder Anspruch 2, wobei das Zeitintervall (t) vorbestimmt ist.

4. Verfahren nach einem der vorstehenden Ansprüche, wobei das Zeitintervall (t) feststehend ist.

5. Verfahren nach einem der vorstehenden Ansprüche, wobei das Zeitintervall (t) von 10ms bis 10s beträgt, das Zeitintervall (t) vorzugsweise von 0,1s bis 5s beträgt, und das Zeitintervall (t) bevorzugter 0,5s bis 3s beträgt.

6. Verfahren nach einem der vorstehenden Ansprüche, wobei der Zeitraum von einem Zyklus von 1µs bis 1ms beträgt.

7. Verfahren nach einem der vorstehenden Ansprüche, wobei sich das Verhältnis von Null erhöht.

8. Verfahren nach einem der vorstehenden Ansprüche, wobei die Pulsweitenmodulation bei einer Bestimmung (52) gestoppt (53) wird, dass Strom, der von der Pumpe (2) aufgenommen wird, einen Schwellenwert überschreitet, wobei der von der Pumpe (2) aufgenommene Strom der Momentanstrom ist, der über einen Zyklus der Pulsweitenmodulation hinweg gemessen wird.

9. Verfahren nach Anspruch 8, wobei die Pulsweitenmodulation nach einer Zeitverzögerung (54) neu gestartet (50) wird, wobei die Pulsweitenmodulation vorzugsweise bei einer weiteren Bestimmung (52) gestoppt (53) wird, dass der von der Pumpe aufgenommene Strom den Schwellenwert überschreitet, und die Pulsweitenmodulation bevorzugter wiederholt gestoppt (53) wird, nachdem sie erneut gestartet (50) worden ist, bis der von der Pumpe aufgenommene Strom den Schwellenwert nicht überschreitet.

10. Verfahren nach einem der Ansprüche 8 oder 9, wobei der von der Pumpe (2) aufgenommene Strom direkt proportional zu einem Fluid-Gegendruck zwischen der Pumpe (2) und einer Fluid-Abgabevorrichtung ist, die mit einem Fluidauslass der Pumpe gekoppelt ist.

11. Einrichtung (1, 20) zur Steuerung der Geschwindigkeit einer mit Gleichstrom angetriebenen elektrischen Pumpe (2) durch Verwenden einer Pulsweitenmodulation der Spannung, die an die Pumpe angelegt wird, nach einem der Ansprüche 1 bis 12, wobei die Einrichtung (1,20) einen Prozessor (14) und eine Schaltvorrichtung (15, 16) umfasst, die an einen Ausgang von dem Prozessor (14) gekoppelt ist, wobei die Schaltvorrichtung (15, 16) angepasst ist, um die Leistungsversorgung (3) für die Pumpe als Reaktion auf die Ausgangssignale, die von dem Prozessor (14) empfangen werden, ein- oder auszuschalten; **dadurch gekennzeichnet, dass** der Prozessor (14) die Geschwindigkeit der Pumpe (2) durch Erhöhen des Verhältnisses der Einschaltzeit zum Zeitraum eines Zyklus der Pulsweitenmodulation erhöht, bis ein Zielverhältnis erreicht ist, wobei sich das Verhältnis über ein Zeitintervall (t) hinweg, das nicht von dem Zielverhältnis abhängig ist, bis zum Zielverhältnis erhöht.

12. Einrichtung (1, 20) nach Anspruch 11, wobei der Prozessor (14) angepasst ist, um ein Eingangssignal zu empfangen, das auf den Strom hinweist, der von der Pumpe (2) aufgenommen wird, wobei der von der Pumpe aufgenommene Strom der Momentanstrom ist, der über einen Zyklus der Pulsweitenmodulation hinweg gemessen wird, wobei der Prozessor (14) vorzugsweise angepasst ist, um die Schaltvorrichtung (15, 16) zu steuern, um die Pulsweitenmodulation bei einer Bestimmung (52) zu stoppen (53), dass das Eingangssignal einen Schwellenwert überschreitet, wobei der Prozessor (14) bevorzugter angepasst ist, um die Schaltvorrichtung (15, 16) zu steuern, um die Pulsweitenmodulation nach einer Zeitverzögerung (54) erneut zu starten (50), und der Prozessor (14) besonders bevorzugt angepasst ist, die Pulsweitenmodulation wiederholt zu stoppen (53), nachdem sie erneut gestartet (50) worden ist, bis der von der Pumpe aufgenommene Strom den Schwellenwert nicht überschreitet.

13. Einrichtung (1, 20) nach den Ansprüchen 11 oder 12, wobei die Schaltvorrichtung (15, 16) weiter eine Treiberschaltung (35) umfasst, die die Ausgangssignale von dem Prozessor (14) empfängt, und wobei die Schaltvorrichtung (15, 16) durch die Treiberschaltung (35) als Reaktion auf die empfangenen Ausgangssignale gesteuert wird; und die Treiberschaltung (35) vorzugsweise ein Halbbrückentreiber ist.

**Revendications**

1. Procédé de commande de la vitesse d'une pompe à actionnement électrique à courant continu (2) utilisant une modulation d'impulsions en largeur de la tension appliquée à la pompe, **caractérisé en ce que** la vitesse de la pompe (2) est augmentée par augmentation du rapport de la largeur d'impulsions à la période d'un cycle de la modulation d'impulsions en largeur à un rapport cible sur un intervalle de temps (t) qui ne dépend pas du rapport cible.

2. Procédé selon la revendication 1, dans lequel le rapport de la largeur d'impulsions à la période de temps d'un cycle de la modulation d'impulsions en largeur est augmenté linéairement (60, 61).

3. Procédé selon la revendication 1 ou la revendication 2, dans lequel l'intervalle de temps (t) est prédéterminé.

4. Procédé selon l'une quelconque des revendications précédentes, dans lequel l'intervalle de temps (t) est fixe.

5. Procédé selon l'une quelconque des revendications précédentes, dans lequel l'intervalle de temps (t) va de 10 ms à 10 s, de préférence l'intervalle de temps (t) va de 0,1 s à 5 s, et plus préférentiellement l'intervalle de temps (t) va de 0,5 s à 3 s.

6. Procédé selon l'une quelconque des revendications précédentes, dans lequel la période d'un cycle va de 1 $\mu$s à 1 ms.

7. Procédé selon l'une quelconque des revendications précédentes, dans lequel le rapport est augmenté à partir de zéro.

8. Procédé selon l'une quelconque des revendications précédentes, dans lequel la modulation d'impulsions en largeur est arrêtée (53) suite à la détermination (52) que le courant consommé par la pompe (2) excède un seuil, dans lequel le courant consommé par la pompe (2) est le courant instantané mesuré sur un cycle de la modulation d'impulsions en largeur.

9. Procédé selon la revendication 8, dans lequel la modulation d'impulsions en largeur est redémarrée (50) après un délai (54), de préférence la modulation d'impulsions en largeur étant arrêtée (53) suite à une autre détermination (52) que le courant consommé par la pompe excède le seuil, et plus préférentiellement la modulation d'impulsions en largeur est arrêtée de manière répétée (53) après avoir été redémarrée (50) jusqu'à ce que le courant consommé par la pompe n'excède pas le seuil.

10. Procédé selon l'une quelconque des revendications 8 ou 9, dans lequel le courant consommé par la pompe (2) est directement proportionnel à une pression de retour de fluide entre la pompe (2) et un dispositif de fourniture de fluide couplé à une sortie de fluide de la pompe.

11. Appareil (1, 20) pour la commande de la vitesse d'une pompe à actionnement électrique de courant continu (2) en utilisant la modulation d'impulsions en largeur de la tension appliquée à la pompe selon l'une quelconque des revendications 1 à 12, l'appareil (1, 20) comprenant un processeur (14) et un dispositif de commutation (15, 16) couplé à une sortie du processeur (14), le dispositif de commutation (15, 16) étant adapté pour activer ou désactiver l'alimentation en énergie (3) pour la pompe en réponse aux signaux de sortie reçus par le processeur (14) ; **caractérisé en ce que** le processeur (14) augmente la vitesse de la pompe (2) par augmentation du rapport de la commutation dans les délais de la période d'un cycle de la modulation d'impulsions en largeur jusqu'à ce qu'un rapport cible soit atteint, le rapport étant augmenté au rapport cible sur un intervalle de temps (t) qui ne dépend pas du rapport cible.

12. Appareil (1, 20) selon la revendication 11, dans lequel le processeur (14) est adapté pour recevoir un signal d'entrée qui indique le courant consommé par la pompe (2), dans lequel le courant consommé par la pompe est le courant instantané mesuré sur un cycle de la modulation d'impulsions en largeur, de préférence le processeur (14) est adapté pour commander le dispositif de commutation (15, 16) pour qu'il arrête (53) la modulation d'impulsions en largeur suite à une détermination (52) que le signal d'entrée excède un seuil, plus préférentiellement le processeur (14) est adapté pour commander le dispositif de commutation (15, 16) pour qu'il redémarre (50) la modulation d'impulsions en largeur après un délai (54), et le plus préférentiellement le processeur (14) est adapté pour arrêter (53) de manière répétée la modulation d'impulsions en largeur après avoir été redémarrée (50) jusqu'à ce que le courant consommé par la pompe n'excède pas le seuil.

13. Appareil (1, 20) selon la revendication 11 ou 12, dans lequel le dispositif de commutation (15, 16) comprend en outre un circuit d'entraînement (35) qui reçoit les signaux de sortie du processeur (14), et dans lequel le dispositif de commutation (15, 16) est commandé par le circuit d'entraînement (35) en réponse aux signaux de sortie reçus ; et de préférence le circuit d'entraînement (35) est un entraîneur à demi-pont.

70

71

72    73    2    74  75    76    78    77

**Fluid tank**        **DC pump**        **Control valve**

Fig. 1

Fig. 2

EP 3 835 575 B1

Fig. 3

*50* start pump

*51* read ADC

*52* ADC > threshold — Yes — *53* stop pump

No

*54* delay

Fig. 4

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010225263 A1
- US 2019316578 A1
- US 2004189229 A1
- JP H06255562 A

**Non-patent literature cited in the description**

- F3 PWM controller ICE3BS03LJG Off-line SMPS Current Mode Controller with integrated 500V Startup Cell (Latched and frequency jitter mode). *Website Infineon Technologies AG,* 06 December 2007